# FASCICULE DE BREVET EUROPEEN

(11) **EP 3 123 314 B1**
(45) Date de publication et mention de la délivrance du brevet: **01.05.2024**
(21) Numéro de dépôt: 15717547.2
(22) Date de dépôt: 20.03.2015
(51) Int. Cl.: G06F 8/61

(54) **PROCÉDÉ ET DISPOSITIF DE CONTRÔLE DU CHANGEMENT DE SYSTÈME D'EXPLOITATION DANS DES NOEUDS DE SERVICE D'UN CALCULATEUR HAUTE PERFORMANCE**
VERFAHREN UND VORRICHTUNG ZUR STEUERUNG DER ÄNDERUNG IN EINEM BETRIEBSSYSTEM BEI DIENSTKNOTEN EINES HOCHLEISTUNGSCOMPUTERS
METHOD AND DEVICE FOR CONTROLLING THE CHANGE IN OPERATING SYSTEM IN SERVICE NODES OF A HIGH-PERFORMANCE COMPUTER

(30) Priorité: 25.03.2014 FR 1452509
(43) Date de publication de la demande: 01.02.2017
(73) Titulaire: Bull S.A.S., 78340 Les Clayes-sous-Bois (FR); Commissariat à l'Energie Atomique et aux Energies Alternatives (CEA), 75015 Paris (FR)
(72) Inventeur: GEORGES, Julien, F-91290 Arpajon (FR); ICETA, Thierry, F-38000 Grenoble (FR); FLACARD, Emmanuel, F-26400 Gigors et Lozeron (FR)
(74) Mandataire: Cabinet Camus Lebkiri
(86) Numéro de dépôt international: PCT/FR2015/050691
(87) Numéro de publication internationale: WO 2015/145035

(56) Documents cités:
- CRISTIAN MAGHERUSAN-STANCIU ET AL: "Grid Site Installation, Management and Monitoring Application", PARALLEL AND DISTRIBUTED COMPUTING (ISPDC), 2011 10TH INTERNATIONAL SYMPOSIUM ON, IEEE, 6 juillet 2011 (2011-07-06), pages 25-32, XP032079122, DOI: 10.1109/ISPDC.2011.14 ISBN: 978-1-4577-1536-5

## Description

L'invention concerne les calculateurs de type dit « haute performance » (ou supercalculateurs), et plus précisément le contrôle du changement de système d'exploitation dans des noeuds de service que comprennent de tels calculateurs haute performance.

Comme le sait l'homme de l'art, les noeuds de service des calculateurs haute performance sont instanciés de manière à fonctionner conformément à une image logicielle de noeud de type arbre adaptée à un système d'exploitation (ou « operating system »).

On entend ici par « instanciation » un agencement logiciel (ou « software ») permettant à un noeud de service de recevoir et d'utiliser un système d'exploitation. Une telle instanciation est définie par une suite de commandes d'instanciation destinée à préparer un noeud, et notamment à provoquer un partitionnement suivi d'un formatage dans un disque de stockage d'un noeud de service.

Par ailleurs, on entend ici par « image logicielle de noeud de type arbre » (ou image arbre basée référence) une photographie de l'agencement logiciel d'un noeud de référence en présence d'un système d'exploitation. Par exemple, dans le cas d'un système d'exploitation de type linux le contenu de cette image correspond à une arborescence hiérarchisée de fichiers linux.

Parfois, l'administrateur d'un calculateur haute performance veut changer le contexte de calcul d'un ensemble de noeuds de service qui sont opérationnels avec une « ancienne » image logicielle de noeud de type arbre adaptée à un « ancien » système d'exploitation (C. Magherusan-Stanciu et al., Grid Site Installation, Management and Monitoring, 10th International Symposium on Parallel and Distributed Computing, 2010). Dans ce cas, il doit mettre en place dans ces noeuds de service une nouvelle image logicielle de noeud de type arbre adaptée à un nouveau système d'exploitation correspondant au nouveau contexte de calcul. Pour ce faire, il peut, par exemple, utiliser un outil de déploiement tel que Ksis^{®} (commercialisé par la société BULL SAS).

Il est rappelé que Ksis^{®} est notamment agencé pour prendre une photographie d'une image adaptée à un système d'exploitation de type linux et de déployer cette photographie sur un très grand nombre de noeuds de service.

Il existe plusieurs méthodes pour réaliser un tel déploiement. L'une d'entre elles consiste :
- à réamorcer (ou « reboot ») des noeuds de service choisis (par exemple via des requêtes PXE (ou GPXE) et DHCP),
- à mettre en place dans chacun des noeuds de service choisis un mini système d'exploitation dédié (ou « embeded »),
- à enclencher et préparer (par partitionnement et formatage) chaque disque de stockage de chacun des noeuds de service choisis,
- à déployer la nouvelle image logicielle de noeud de type arbre selon un procédé en chaîne sur tous les noeuds de service choisis,
- à gérer la chaîne en cas de perte de noeuds de service choisis et/ou de difficulté survenue sur le réseau de communication utilisé,
- à mettre en place une configuration de base permettant de rendre accessibles tous les noeuds de service choisis,
- à faire remonter dans un noeud de gestion les erreurs détectées, les analyses effectuées et le compte-rendu du déploiement.

On notera que toutes les opérations qui précèdent doivent être effectuées de façon synchrone sur tous les noeuds de service choisis et ne peuvent pas être découplées, ce qui ne facilite pas leur surveillance. Par ailleurs, l'étape pendant laquelle on prépare les disques de stockage des noeuds de service choisis arrive très tôt, et donc si l'une des opérations suivantes ne se déroule pas correctement dans un noeud de service choisi (par exemple du fait d'un problème survenu dans une mémoire, un disque de stockage ou du matériel (« hardware »)), l'ancienne organisation de ce noeud de service est perdue, ce qui le rend non opérationnel.

L'invention a donc pour but d'améliorer la situation, et notamment de permettre à l'administrateur d'un calculateur haute performance de contrôler de façon plus confortable les opérations de déploiement d'une nouvelle image logicielle de noeud de type arbre.

Elle propose notamment à cet effet un procédé de contrôle selon la revendication 1.

On peut ainsi réaliser quand on le désire un déploiement de type « autonome » grâce à la prise en compte du fait que les noeuds de service du calculateur haute performance sont accessibles.

Le procédé selon l'invention peut comporter d'autres caractéristiques qui peuvent être prises séparément ou en combinaison, et notamment :
- dans un premier mode de réalisation, dans ladite étape (ii) on transfère ensemble dans lesdits noeuds de service choisis ladite image de référence, ledit noyau d'amorçage, ledit module de lancement et ladite version réduite définis, et dans ladite étape (iii) ledit noyau d'amorçage transféré dans chacun desdits noeuds de service choisis lance ledit module de lancement transféré avec lui ;
- dans un second mode de réalisation, dans ladite étape (ii) on commence par transférer dans lesdits noeuds de service choisis ladite image de référence, puis on transmet à chacun desdits noeuds de service choisis un message de déclenchement lui ordonnant de télécharger d'un noeud de gestion dudit calculateur haute performance lesdits noyau d'amorçage, version réduite et module de lancement définis de sorte que ce dernier réalise localement automatiquement l'installation locale après avoir été lancé par ledit noyau d'amorçage ;
- dans ladite étape (iii) chaque module de lancement réserve dans ladite mémoire volatile de son noeud de service choisi une zone de stockage qui est propre à stocker ladite image de référence transférée, puis charge ladite image de référence transférée dans cette zone de stockage, puis déclenche une suite de commandes propre à instancier son noeud de service conformément à la définition d'instanciation contenue dans l'image de référence transférée, puis déclenche un réamorçage de son noeud de service ;
   > dans ladite étape (iii), avant de déclencher ledit réamorçage, chaque module de lancement contrôle le stockage de ladite image de référence dans ledit disque de stockage de son noeud de service.

L'invention propose également un produit programme d'ordinateur comprenant un jeu d'instructions qui, lorsqu'il est exécuté par des moyens de traitement, est propre à mettre en oeuvre un procédé de contrôle du type de celui présenté ci-avant pour contrôler un changement de système d'exploitation dans des noeuds de service comportant chacun au moins un disque de stockage et une mémoire volatile et faisant partie d'un calculateur haute performance.

L'invention propose également un dispositif de contrôle du changement d'un système d'exploitation dans des noeuds de service selon la revendication 7.

L'invention propose également un calculateur haute performance comprenant des noeuds de service, comportant chacun au moins un disque de stockage et une mémoire volatile, et un dispositif de contrôle du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique et fonctionnelle un calculateur haute performance équipé d'un exemple de réalisation d'un dispositif de contrôle selon l'invention, et
- la figure 2 illustre un exemple d'algorithme mettant en oeuvre un procédé de contrôle selon l'invention.

L'invention a notamment pour objet de proposer un procédé de contrôle, et un dispositif de contrôle D associé, destinés à permettre le contrôle du changement de système d'exploitation dans des noeuds de service Nᵢⱼ d'un calculateur haute performance CHP comprenant également un noeud de gestion NG.

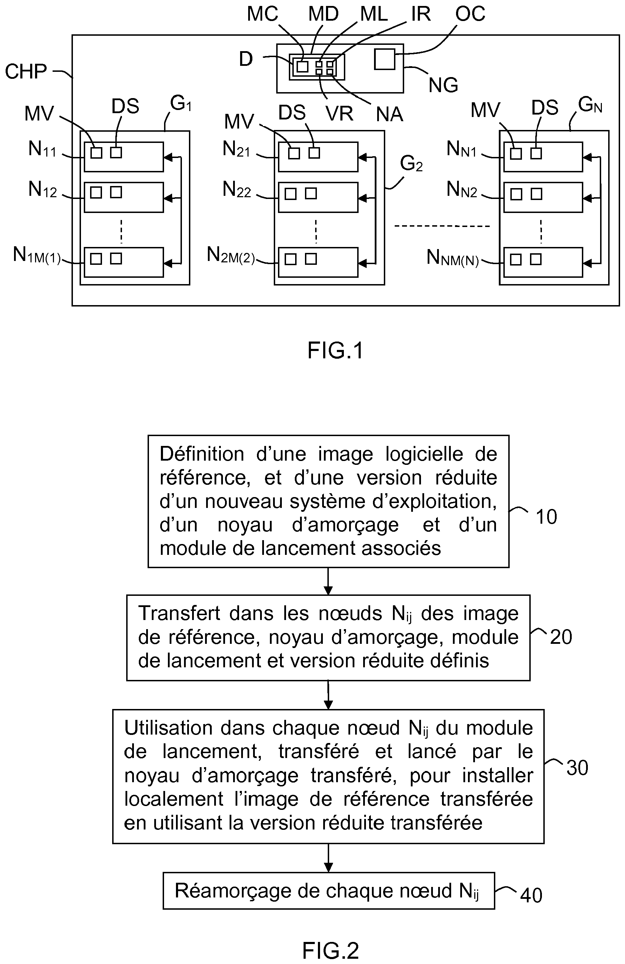

On a schématiquement illustré sur la figure 1 un exemple non limitatif de calculateur haute performance CHP. Dans cet exemple, les noeuds de service Nᵢⱼ du calculateur CHP sont regroupés dans N groupes (dits à haute disponibilité (ou HA)) Gᵢ (avec i = 1 à N). Chaque groupe (à haute disponibilité) Gᵢ comporte M(i) noeuds (de service) Nᵢⱼ (avec j = 1 à M(i)). Par exemple, N est égal à 10 et M(i) est égal à 500 quel que soit le groupe Gᵢ considéré (et donc quelle que soit la valeur de l'indice i). Mais le nombre de noeuds Nᵢⱼ pourrait varier d'un groupe Gᵢ à l'autre G_{i'}. Par ailleurs, le nombre N de groupes Gᵢ peut prendre n'importe quelle valeur supérieure ou égale à un (1). De même, le nombre M(i) de noeuds Nᵢⱼ d'un groupe Gᵢ peut prendre n'importe quelle valeur supérieure ou égale à trois (3).

Les noeuds (de service) Nᵢⱼ ou les groupes Gᵢ peuvent, par exemple, être couplés les uns aux autres et au noeud de gestion NG via au moins un réseau de communication (comme par exemple l'Internet).

Chaque noeud Nᵢⱼ dispose de ressources qui sont généralement partagées avec les autres noeuds N_{ij'} (j' ≠ j) de son groupe Gᵢ, sous le contrôle d'un logiciel de haute disponibilité (ou HA (« High Availability »)). Ces ressources peuvent être de tout type dès lors qu'il s'agit de services configurables qui sont utiles au calculateur CHP ou à une application tournant dans ce calculateur CHP.

Par ailleurs, chaque noeud Nᵢⱼ comprend au moins un disque de stockage DS et une mémoire volatile MV, par exemple de type RAM (« Random Access Memory »). De plus, chaque noeud Nᵢⱼ est instancié de manière à fonctionner conformément à une image logicielle de noeud de type arbre adaptée à un système d'exploitation (ou « operating system »). Par conséquent, on considère ici que chaque noeud Nᵢⱼ est opérationnel. On notera que l'image logicielle (de noeud de type arbre), qui constitue une fois instanciée un système d'exploitation, est stockée (ou chargée) dans la mémoire volatile MV de chaque noeud Nᵢⱼ.

Il est ici rappelé que le système d'exploitation est chargé d'assurer l'interface entre des logiciels applicatifs (ou « software ») et du matériel informatique (ou « hardware »).

Le noeud de gestion NG comprend de préférence un outil de configuration OC destiné à configurer des ressources de noeuds Nᵢⱼ. On considère dans ce qui suit, à titre d'exemple non limitatif, que l'outil de configuration OC est Kconf^{®} (commercialisé par la société BULL SAS).

Comme indiqué plus haut, l'invention propose un procédé destiné à permettre le contrôle du changement de système d'exploitation dans des noeuds Nᵢⱼ choisis du calculateur CHP. Par exemple, tous les noeuds Nᵢⱼ du calculateur CHP peuvent être concernés par ce changement. Dans une première variante, ce sont tous les noeuds Nᵢⱼ de l'un au moins des groupes Gᵢ qui peuvent être concernés par ce changement. Dans une seconde variante, seuls certains noeuds Nᵢⱼ de l'un au moins des groupes Gᵢ peuvent être concernés par ce changement.

Ce procédé comprend des première (i), deuxième (ii) et troisième (iii) étapes. Au moins la deuxième étape (ii) peut être mise en oeuvre par un dispositif de contrôle D selon l'invention.

Dans l'exemple non limitatif illustré sur la figure 1, le dispositif de contrôle D fait partie du noeud de gestion NG, et plus précisément du module de déploiement MD (ici Ksis^{®}) de ce dernier (OC). Mais cela n'est pas obligatoire. Il pourrait en effet s'agir d'un équipement qui est externe au noeud de gestion NG mais accessible par ce dernier (CHP), par exemple du fait d'une connexion informatique. Par conséquent, le dispositif de contrôle D est réalisé, soit sous la forme de modules logiciels (ou informatiques, ou encore « software ») ; on est alors en présence d'un produit programme d'ordinateur comprenant un jeu d'instructions qui, lorsqu'il est exécuté par des moyens de traitement de type circuits électroniques (ou « hardware »), est propre à mettre en oeuvre une partie au moins du procédé de contrôle, soit sous la forme d'une combinaison de modules logiciels et de circuits électroniques.

Durant la première étape (i) du procédé selon l'invention, on (une personne autorisée par l'administrateur du calculateur CHP) définit pour des noeuds (de service) Nᵢⱼ choisis une version réduite VR d'un nouveau système d'exploitation à installer, un noyau d'amorçage NA, une image logicielle de noeud de type arbre IR, dite de référence, adaptée à ce nouveau système d'exploitation et comportant une définition d'une instanciation à instaurer dans ces noeuds Nᵢⱼ choisis, et un module de lancement ML propre à installer cette image de référence IR localement dans chaque noeud Nᵢⱼ choisi.

Il est important de noter que ce qui différencie une image de référence IR (selon l'invention) d'une image logicielle de noeud de type arbre (classique), c'est le fait qu'elle comprend en complément de cette dernière la définition de l'instanciation qui doit être instaurée dans des noeuds Nᵢⱼ choisis. Il s'agit donc d'une photographie d'un nouvel agencement logiciel d'un noeud Nᵢⱼ choisi en présence d'un nouveau système d'exploitation à laquelle est adjointe une suite de commandes d'instanciation destinée à préparer ce noeud Nᵢⱼ choisi, et notamment à provoquer un partitionnement choisi suivi d'un formatage choisi dans un disque de stockage DS de ce noeud Nᵢⱼ choisi. Par exemple, le nouveau système d'exploitation peut être linux ou une version particulière de linux.

Le noyau d'amorçage (ou « boot kernel ») NA est un programme informatique qui est chargé de lancer (ou faire fonctionner) le module de lancement ML associé.

La version réduite VR du nouveau système d'exploitation est un ensemble de commandes destiné à permettre au module de lancement ML de charger l'image de référence IR associée et d'instancier un noeud Nᵢⱼ choisi dans lequel il est transféré. Cet ensemble peut, par exemple, comprendre environ cent commandes.

Le module de lancement ML est un programme informatique qui est chargé, lorsqu'il a été lancé par le noyau d'amorçage NA associé, d'installer une image de référence IR dans le noeud Nᵢⱼ choisi dans lequel il est transféré en utilisant la version réduite VR associée.

Par exemple, et comme illustré non limitativement sur la figure 1, la version réduite VR, le noyau d'amorçage NA, l'image de référence IR et le module de lancement ML peuvent être stockés dans une mémoire de l'outil de configuration OC, laquelle fait éventuellement partie du module de déploiement MD (voire du dispositif de contrôle D).

On notera que le noeud de gestion NG comprend une interface homme/machine (non représentée) qui peut éventuellement permettre à une personne (autorisée par l'administrateur du calculateur CHP) de concevoir et d'optimiser les définitions de la version réduite VR, du noyau d'amorçage NA, de l'image de référence IR et du module de lancement ML. On notera également que le dispositif de contrôle D peut être éventuellement agencé de manière à superviser ces conception et optimisation de définitions via l'interface homme/machine.

Durant la deuxième étape (ii) du procédé selon l'invention, on transfère dans les noeuds (de service) Nᵢⱼ choisis l'image de référence IR, le noyau d'amorçage NA, le module de lancement ML et la version réduite VR qui ont été définis dans l'étape (i).

Ce transfert peut se faire d'au moins deux façons différentes.

Une première façon consiste à transférer ensemble dans chacun des noeuds Nᵢⱼ choisis l'image de référence IR, le noyau d'amorçage NA, le module de lancement ML et la version réduite VR qui ont été définis dans l'étape (i). Ce transfert est déclenché par le noeud de gestion NG et contrôlé par des moyens de contrôle MC du dispositif de contrôle D à la requête de l'administrateur du calculateur CHP.

Une seconde façon consiste à commencer par transférer dans chacun des noeuds Nᵢⱼ choisis uniquement l'image de référence IR, puis à transmettre à chacun de ces noeuds Nᵢⱼ choisis un message de déclenchement lui ordonnant de télécharger du noeud de gestion NG le noyau d'amorçage NA, la version réduite VR et le module de lancement ML qui ont été définis et qui sont associés à cette image de référence IR transférée. Ces deux transferts peuvent être différés dans le temps, et sont déclenchés par le noeud de gestion NG et contrôlés par des moyens de contrôle MC du dispositif de contrôle D à la requête de l'administrateur du calculateur CHP.

Par exemple, le message de déclenchement déclenche automatiquement dans le noeud Nᵢⱼ qui le reçoit un programme d'amorçage (ou « boot ») de type réseau PXE (ou GPXE) qui va à son tour organiser le téléchargement auprès du noeud de gestion NG.

Chaque transfert peut, par exemple, être réalisé au moyen de la commande « ksis copy » qui est offerte par le module de déploiement Ksis^{®}. Mais toute autre commande (ici) linux de type copie à travers un réseau de communication peut être utilisée.

Une fois que l'image de référence IR a été transférée dans un noeud Nᵢⱼ choisi, elle est stockée dans le disque dur DS de ce dernier (Nᵢⱼ). Par ailleurs, une fois que le noyau d'amorçage NA, la version réduite VR et le module de lancement ML ont été transférés dans un noeud Nᵢⱼ choisi, ils sont stockés dans la mémoire volatile MV de ce dernier (Nᵢⱼ).

Durant la troisième étape (iii) du procédé selon l'invention, le noyau d'amorçage NA transféré dans chaque noeud de service Nᵢⱼ choisi lance le module de lancement ML transféré dans ce dernier (Nᵢⱼ) pour qu'il installe localement l'image de référence IR transférée en utilisant la version réduite VR transférée.

Le déclenchement de cette utilisation locale du module de lancement ML peut se faire automatiquement dès lors que ce module de lancement ML se retrouve stocké dans la mémoire volatile MV d'un noeud Nᵢⱼ choisi en même temps que le noyau d'amorçage NA associé.

Dans l'étape (iii) chaque module de lancement ML commence par analyser l'image de référence IR transférée et la capacité de stockage encore disponible dans la mémoire volatile MV de son noeud Nᵢⱼ choisi afin de réserver dans cette mémoire volatile MV une zone de stockage propre à stocker cette image de référence IR. Puis, ce module de lancement ML charge l'image de référence IR dans cette zone de stockage. Puis, ce module de lancement ML déclenche une suite de commandes propre à instancier son noeud Nᵢⱼ conformément à la définition d'instanciation qui est contenue dans cette image de référence IR. Pour ce faire, il va utiliser les commandes qui sont contenues dans la version réduite VR chargée avec lui dans la mémoire volatile MV. Cela provoque notamment un partitionnement du disque de stockage DS, puis un formatage de ce dernier (DS).

Les opérations d'instanciation étant presque les dernières effectuées, si un quelconque problème intervient avant elles, le noeud Nᵢⱼ ne devient pas non opérationnel car il continue de fonctionner avec l'ancienne image de référence qui n'a pas été désinstallée.

Si l'instanciation a été correctement réalisée, le module de lancement ML déclenche un réamorçage (ou « reboot ») de son noeud Nᵢⱼ afin qu'il fonctionne désormais conformément à la nouvelle image de référence IR installée qui est adaptée au nouveau système d'exploitation.

De préférence, dans l'étape (iii), avant de déclencher le réamorçage (ou reboot), chaque module de lancement ML contrôle le stockage de l'image de référence IR (complète), éventuellement dans une version compressée, dans le disque de stockage DS de son noeud Nᵢⱼ, de sorte qu'en cas de défaut dans l'installation de cette (nouvelle) image de référence IR on ne soit pas obligé de recommencer son transfert (dans ce cas, il suffit de recommencer le transfert du noyau d'amorçage NA, de la version réduite VR et du module de lancement ML associés, ou bien de réinstaller l'ancienne image de référence stockée sur le disque de stockage DS et qui permettait un fonctionnement correct). On notera que chaque module de lancement ML peut également et éventuellement contrôler le stockage de l'ancienne image de référence, éventuellement dans une version compressée, dans le disque de stockage DS de son noeud Nᵢⱼ.

On a schématiquement illustré sur la figure 2 un exemple d'algorithme mettant en oeuvre un exemple de procédé de contrôle selon l'invention.

Cet algorithme comprend une sous-étape 10 dans laquelle on (une personne) définit pour des noeuds Nᵢⱼ choisis une version réduite VR d'un nouveau système d'exploitation à installer, un noyau d'amorçage NA, une image de référence IR, adaptée à ce nouveau système d'exploitation et comportant une définition d'une instanciation à instaurer dans les noeuds Nᵢⱼ choisis, et un module de lancement ML propre à installer cette image de référence IR localement dans chaque noeud Nᵢⱼ choisi. On stocke ensuite cette version réduite VR, ce noyau d'amorçage NA, cette image de référence IR et ce module de lancement ML, par exemple dans le noeud de gestion NG du calculateur CHP.

Cette sous-étape 10 constitue ici l'étape (i) du procédé de contrôle selon l'invention.

L'algorithme se poursuit par une sous-étape 20 dans laquelle on (le noeud de gestion NG sous le contrôle du dispositif de contrôle D) transfère dans les noeuds Nᵢⱼ choisis (en une ou deux phases) l'image de référence IR, le noyau d'amorçage NA, le module de lancement ML et la version réduite VR définis dans la sous-étape 10.

Cette sous-étape 20 constitue ici l'étape (ii) du procédé de contrôle selon l'invention.

Puis, dans une sous-étape 30, le noyau d'amorçage NA transféré dans chaque noeud Nᵢⱼ choisi lance le module de lancement ML transféré dans ce dernier (Nᵢⱼ) pour installer localement l'image de référence IR transférée en utilisant la version réduite VR.

Enfin, dans une sous-étape 40, chaque module de lancement ML déclenche un réamorçage (ou reboot) de son noeud de service Nᵢⱼ.

Les sous-étapes 30 et 40 constituent ici l'étape (iii) du procédé de contrôle selon l'invention.

On notera que l'invention permet de transférer dans les noeuds de service plusieurs images de référence, afin de permettre à l'administrateur de choisir parmi ces différentes images de référence transférées celle qu'il souhaite mettre en place à un instant donné. Par ailleurs, l'instant où l'administrateur décide de réaliser un transfert peut être celui où le réseau de communication qui couple les noeuds est le plus performant au regard du contexte de sécurité souhaité. En outre, la mise en place de l'une des images de référence transférées peut s'effectuer alors même que le calculateur CHP exécute une tâche. De plus, le déploiement « autonome » qu'offre l'invention permet de réinstaller très facilement, à n'importe quel moment choisi par l'administrateur, une ancienne image de référence.

## Revendications

1. Procédé de contrôle du changement de système d'exploitation dans des noeuds de service comportant chacun au moins un disque de stockage (DS) et une mémoire volatile (MV) et faisant partie d'un calculateur haute performance (CHP), **caractérisé en ce qu'**il comprend
- une étape (i, 10) dans laquelle on définit pour des noeuds de service choisis, un noyau d'amorçage (NA), une image logicielle de noeud de type arbre (IR), dite de référence, adaptée audit nouveau système d'exploitation et comportant une définition d'une instanciation à instaurer dans lesdits noeuds de service choisis, l'image logicielle étant une photographie d'un agencement logiciel d'un noeud de référence en présence dudit nouveau système d'exploitation, on définit également un module de lancement (ML) propre à installer ladite image de référence localement dans chaque noeud de service choisi, et une version réduite (VR) d'un nouveau système d'exploitation à installer comportant un ensemble de commandes destiné à permettre au module de lancement de charger l'image de référence,
- une étape (ii, 20) dans laquelle on transfère dans lesdits noeuds de service choisis ladite image de référence (IR), ledit noyau d'amorçage (NA), ledit module de lancement (ML) et ladite version réduite (VR) définis, et
- une étape (iii, 30, 40) dans laquelle ledit noyau d'amorçage (NA) transféré dans chaque noeud de service choisi lance ledit module de lancement (ML) transféré dans ce dernier pour installer localement ladite image de référence (IR) transférée en utilisant ladite version réduite (VR) transférée.

2. Procédé selon la revendication 1, **caractérisé en ce que** dans ladite étape (ii, 20) on transfère ensemble dans lesdits noeuds de service choisis ladite image de référence (IR), ledit noyau d'amorçage (NA), ledit module de lancement (ML) et ladite version réduite (VR) définis, et dans ladite étape (iii, 30, 40) ledit noyau d'amorçage (NA) transféré dans chacun desdits noeuds de service choisis lance ledit module de lancement (ML) transféré avec lui.

3. Procédé selon la revendication 1, **caractérisé en ce que** dans ladite étape (ii, 20) on commence par transférer dans lesdits noeuds de service choisis ladite image de référence (IR), puis on transmet à chacun desdits noeuds de service choisis un message de déclenchement lui ordonnant de télécharger d'un noeud de gestion (NG) dudit calculateur haute performance (CHP) lesdits noyau d'amorçage (NA), version réduite (VR) et module de lancement (ML) définis de sorte que ce dernier (ML) réalise localement automatiquement ladite installation locale après avoir été lancé par ledit noyau d'amorçage (NA).

4. Procédé selon l'une des revendications 2 et 3, **caractérisé en ce que** dans ladite étape (iii, 30, 40) chaque module de lancement (ML) réserve dans ladite mémoire volatile (MV) de son noeud de service choisi une zone de stockage propre à stocker ladite image de référence (IR), puis charge ladite image de référence transférée dans cette zone de stockage, puis déclenche une suite de commandes propre à instancier son noeud de service conformément à la définition d'instanciation contenue dans l'image de référence transférée, puis déclenche un réamorçage de son noeud de service.

5. Procédé selon la revendication 4, **caractérisé en ce que** dans ladite étape (iii, 30, 40), avant de déclencher ledit réamorçage, chaque module de lancement (ML) contrôle le stockage de ladite image de référence (IR) dans ledit disque de stockage (DS) de son noeud de service.

6. Produit programme d'ordinateur comprenant un jeu d'instructions qui, lorsqu'il est exécuté par des moyens de traitement, est propre à mettre en oeuvre le procédé selon l'une des revendications précédentes pour contrôler un changement de système d'exploitation dans des noeuds de service comportant chacun au moins un disque de stockage (DS) et une mémoire volatile (MV) et faisant partie d'un calculateur haute performance (CHP).

7. Dispositif (D) de contrôle du changement d'un système d'exploitation dans des noeuds de service comportant chacun au moins un disque de stockage (DS) et une mémoire volatile (MV) et faisant partie d'un calculateur haute performance (CHP), **caractérisé en ce qu'**il comprend des moyens de contrôle (MC) agencés pour contrôler le transfert dans des noeuds de service choisis d'une version réduite (VR) d'un nouveau système d'exploitation à installer, d'un noyau d'amorçage (NA), d'une image logicielle de noeud de type arbre (IR), dite de référence, adaptée audit nouveau système d'exploitation et comportant une définition d'une instanciation à instaurer dans lesdits noeuds de service choisis, l'image logicielle étant une photographie d'un agencement logiciel d'un noeud de référence en présence dudit nouveau système d'exploitation, et d'un module de lancement (ML) propre, après avoir été lancé par ledit noyau d'amorçage (NA) transféré, à installer localement ladite image de référence (IR) en utilisant ladite version réduite (VR) transférée.

8. Calculateur haute performance (CHP) comprenant des noeuds de service comportant chacun au moins un disque de stockage (DS) et une mémoire volatile (MV), **caractérisé en ce qu'**il comprend en outre un dispositif de contrôle (D) selon la revendication 7.

## Patentansprüche

1. Verfahren zur Steuerung der Änderung des Betriebssystems in den Dienstknoten, die jeweils mindestens eine Speicherplatte (DS) und einen flüchtigen Speicher (MV) umfassen und Teil eines Hochleistungsrechners (CHP) sind, **dadurch gekennzeichnet, dass** dieses Verfahren Folgendes umfasst:
- einen Schritt (i, 10), in dem man für ausgewählte Dienstknoten, einen Boot-Kernel (NA), ein Software-Image eines Knotens vom Typ Baum (IR), das als Referenzbild bezeichnet wird, definiert, das an das neue Betriebssystem angepasst ist und eine Definition einer in den ausgewählten Dienstknoten einzurichtenden Instantiierung umfasst, wobei das Software-Image eine Fotografie einer Software-Anordnung eines Referenzknotens in Gegenwart des neuen Betriebssystems ist, außerdem ein Startmodul (ML) definiert wird, das das Referenzbild lokal in jedem ausgewählten Dienstknoten installieren kann, und eine reduzierte Version (VR) eines neu zu installierenden Betriebssystems definiert, das einen Satz von Befehlen enthält, die dazu bestimmt sind, dem Startmodul das Laden des Referenzbildes zu ermöglichen,
- einen Schritt (ii, 20), in dem in den ausgewählten Dienstknoten das definierte Referenzbild (IR), der definierte Boot-Kernel (NA), das definierte Startmodul (ML) und die definierte reduzierte Version (VR) übertragen werden, und
- einen Schritt (iii, 30, 40), in dem der in jeden ausgewählten Dienstknoten übertragene Boot-Kernel (NA) das in diesen übertragene Startmodul (ML) startet, um das übertragene Referenzbild (IR) unter Verwendung der übertragenen reduzierten Version (VR) lokal zu installieren.

2. Verfahren nach Anspruch 1, **dadurch gekennzeichnet, dass** in dem Schritt (ii, 20) das definierte Referenzbild (IR), der definierte Boot-Kernel (NA), das definierte Startmodul (ML) und die definierte reduzierte Version (VR) gemeinsam in die ausgewählten Dienstknoten übertragen werden, und in dem Schritt (iii, 30, 40) der in jeden der ausgewählten Dienstknoten übertragene Boot-Kernel (NA) das damit übertragene Startmodul (ML) startet.

3. Verfahren nach Anspruch 1, **dadurch gekennzeichnet, dass** in dem Schritt (ii, 20) zunächst das Referenzbild (IR) in die ausgewählten Dienstknoten übertragen wird, dann jedem der ausgewählten Dienstknoten eine Triggernachricht übermittelt wird, die ihn anweist, von einem Verwaltungsknoten (NG) des Hochleistungsrechners (CHP) den definierten Boot-Kernel (NA), die definierte reduzierte Version (VR) und das definierte Startmodul (ML) herunterzuladen, sodass das letztere (ML) lokal automatisch die lokale Installation durchführt, nachdem es vom Boot-Kernel (NA) gestartet wurde.

4. Verfahren nach einem der Ansprüche 2 und 3, **dadurch gekennzeichnet, dass** in dem Schritt (iii, 30, 40) jedes Startmodul (ML) in dem flüchtigen Speicher (MV) seinem ausgewählten Dienstknoten eine Speicherzone reserviert, die geeignet ist, das Referenzbild (IR) zu speichern, dann das übertragene Referenzbild in diese Speicherzone lädt, dann eine Befehlsfolge auslöst, die geeignet ist, seinen Dienstknoten gemäß der in dem übertragenen Referenzbild enthaltenen Instantiierungsdefinition zu instantiieren, und dann einen Neustart seines Dienstknotens auslöst.

5. Verfahren nach Anspruch 4, **dadurch gekennzeichnet, dass** in dem Schritt (iii, 30, 40) vor dem Auslösen des Neustarts jedes Startmodul (ML) die Speicherung des Referenzbildes (IR) in der Speicherplatte (DS) seines Dienstknotens überprüft.

6. Computerprogrammprodukt, das einen Satz von Befehlen umfasst, der bei Ausführung durch Verarbeitungsmittel dazu geeignet ist, das Verfahren nach einem der vorstehenden Ansprüche zum Steuern einer Änderung des Betriebssystems in den Dienstknoten zu implementieren, die jeweils eine Speicherplatte (DS) und einen flüchtigen Speicher (MV) umfassen und Teil eines Hochleistungsrechners (CHP) sind.

7. Vorrichtung (D) zur Steuerung der Änderung eines Betriebssystems in Dienstknoten, die jeweils mindestens eine Speicherplatte (DS) und einen flüchtigen Speicher (MV) umfassen und Teil eines Hochleistungsrechners (CHP) sind, **dadurch gekennzeichnet, dass** diese Vorrichtung Kontrollmittel (MC) umfasst, die so ausgelegt sind, dass sie die Übertragung einer reduzierten Version (VR) eines neuen zu installierenden Betriebssystems, eines Boot-Kernels (NA), eines Software-Images eines Knotens vom Typ Baum (IR), das als Referenzbild bezeichnet wird, das an das neue Betriebssystem angepasst ist und eine Definition einer in den ausgewählten Dienstknoten einzurichtenden Instantiierung umfasst, wobei das Software-Image eine Fotografie einer Software-Anordnung eines Referenzknotens in Gegenwart des neuen Betriebssystems ist, und eines Startmoduls (ML), das, nachdem es von dem übertragenen Boot-Kernel (NA) gestartet wurde, das Referenzbild (IR) unter Verwendung der übertragenen reduzierten Version (VR) lokal installieren kann, in ausgewählten Dienstknoten kontrollieren.

8. Hochleistungsrechner (CHP) mit Dienstknoten, die jeweils mindestens eine Speicherplatte (DS) und einen flüchtigen Speicher (MV) umfassen, **dadurch gekennzeichnet, dass** dieser Rechner ferner eine Steuervorrichtung (D) nach Anspruch 7 umfasst.

## Claims

1. A method for controlling the change of operating system in service nodes each comprising at least one storage disc (DS) and a volatile memory (MV) and being part of a high-performance computer (CHP), **characterized in that** it comprises
- a step (i, 10) in which, for chosen service nodes, there is defined a boot kernel (NA), a tree-type node software image (IR), referred to as a reference image, adapted to said new operating system and comprising a definition of an instantiation to be instituted in said chosen service nodes, the software image being a photograph of a software arrangement of a reference node in the presence of said new operating system, there is also defined a launch module (ML) capable of installing said reference image locally in each chosen service node, and a reduced version (VR) of a new operating system to be installed comprising a set of commands intended to allow the launch module to load the reference image,
- a step (ii, 20) in which said defined reference image (IR), boot kernel (NA), launch module (ML), and reduced version (VR) are transferred into said chosen service nodes; and
- a step (iii, 30, 40) in which said boot kernel (NA) transferred into each chosen service node launches said launch module (ML) transferred into the latter to locally install said reference image (IR) transferred using said transferred reduced version (VR).

2. The method according to claim 1, **characterized in that** in said step (ii, 20), said defined reference image (IR), boot kernel (NA), launch module (ML), and reduced version (VR) are transferred, and in said step (iii, 30, 40), said boot kernel (NA) transferred into each of said chosen service nodes launches said launch module (ML) transferred with it.

3. The method according to claim 1, **characterized in that** said step (ii, 20) commences by transferring into said chosen service nodes said reference image (IR), then a trigger message is transmitted to each of said chosen service nodes instructing it to download said defined boot kernel (NA), reduced version (VR), and launch module (ML) from a management node (NG) of said high-performance computer (CHP), so that the launch module (ML) automatically performs said local installation after having been launched by said boot kernel (NA).

4. The method according to one of claims 2 and 3, **characterized in that** in said step (iii, 30, 40) each launch module (ML) reserves in said volatile memory (MV) of its chosen service node a storage area capable of storing said reference image (IR), then loads said reference image transferred into this storage area, then triggers a series of commands capable of instantiating its service node in accordance with the instantiation definition contained in the transferred reference image, then triggers a reboot of its service node.

5. The method according to claim 4, **characterized in that** in said step (iii, 30, 40), before triggering said reboot, each launch module (ML) controls the storage of said reference image (IR) in said storage disc (DS) of its service node.

6. A computer program product comprising a set of instructions which, when executed by processing means, is capable of implementing the method according to one of the preceding claims to control a change of operating system in service nodes each comprising at least one storage disc (DS) and a volatile memory (MV) and forming part of a high-performance computer (CHP).

7. A device (D) for controlling the change of an operating system in service nodes each comprising at least one storage disc (DS) and a volatile memory (MV) and being part of a high-performance computer (CHP), **characterized in that** it comprises control means (MC) arranged to control the transfer into chosen service nodes of a reduced version (VR) of a new operating system to be installed, a boot kernel (NA), a tree-type node software image (IR), referred to as a reference image, adapted to said new operating system and comprising a definition of an instantiation to be instituted in said chosen service nodes, the software image being a photograph of a software arrangement of a reference node in the presence of said new operating system, and of a specific launch module (ML) capable, after having been launched by said transferred boot kernel (NA), of locally installing said reference image (IR) using said transferred reduced version (VR).

8. A high-performance computer (CHP) comprising service nodes each comprising at least one storage disc (DS) and a volatile memory (MV), **characterized in that** it further comprises a control device (D) according to claim 7.
